Europäisches Patentamt

European Patent Office

Office européen des brevets

(11) Publication number: **0 064 504
B1**

# EUROPEAN PATENT SPECIFICATION

(45) Date of publication of patent specification: **21.11.85**

(21) Application number: **81902770.7**

(22) Date of filing: **21.09.81**

(86) International application number:
**PCT/US81/01267**

(87) International publication number:
**WO 82/01701 27.05.82 Gazette 82/14**

(51) Int. Cl.⁴: **C 01 B 7/13, C 01 D 3/12,
C 07 C 17/22**

(54) PREPARATION OF SUBSTANTIALLY ANHYDROUS IODINE COMPOUNDS.

(30) Priority: **21.11.80 US 209351**

(43) Date of publication of application:
**17.11.82 Bulletin 82/46**

(45) Publication of the grant of the patent:
**21.11.85 Bulletin 85/47**

(84) Designated Contracting States:
**DE FR GB NL**

(56) References cited:
**EP-A-0 046 870
JP-B-47 015 456
US-A-1 890 874
US-A-3 049 406
US-A-3 154 382
US-A-3 761 579
US-A-3 784 518
US-A-3 848 065**

(73) Proprietor: **EASTMAN KODAK COMPANY
343 State Street
Rochester New York 14650 (US)**

(72) Inventor: **POLICHNOWSKI, Stanley Whitmore
547 Rambling Road
Kingsport, TN 37663 (US)**

(74) Representative: **Baron, Paul Alexander Clifford
et al
Kodak Limited Patent Department Headstone
Drive
Harrow Middlesex HA1 4TY (GB)**

## Description

This invention pertains to a process for the preparation of substantially anhydrous hydrogen iodide, lithium iodide and/or methyl iodide by the direct reaction of hydrogen with iodine ($I_2$) in the presence of a noble metal-containing catalyst.

Hydrogen iodide, lithium iodide and methyl iodide are known to be useful in prior art processes as starting or intermediate materials, or catalyst components. One such process is the process for producing acetic anhydride by the direct carbonylation of methyl acetate with carbon monoxide in the presence of a catalyst comprising a noble metal component and an iodine component. Carbonylation processes of this type have been described extensively in the patent literature, as illustrated by U.S. Patent 4,046,807, issued September 6, 1977, European Published Patent Application No. 0008396, published March 5, 1980 and Japanese Published Patent Application No. 75-47922, published April 28, 1975.

Catalysts containing noble metal and iodine components that are employed in the carbonylation of methyl acetate are typically formed by mixing a noble metal component, e.g. $RhCl_3 \cdot xH_2O$, with an iodine component such as hydrogen iodide, lithium iodide or methyl iodide. As indicated in the aforementioned patent and published patent applications, a wide variety of promotors can be used in the catalyst combination including, e.g. organo-phosphines, organo-amines, lithium compounds and combinations of an aliphatic carboxylic acid with a heterocyclic aromatic compound containing a quaternary nitrogen atom.

The carbonylation process described previously requires the use of rather large quantities of the hydrogen iodide, lithium iodide and/or methyl iodide. Furthermore, in such processes, it is necessary, or at least very desirable, to use anhydrous iodine compounds since the presence of significant quantities of water leads to the formation of acetic acid which, of course, deleteriously affects the yield of the desired acetic anhydride. Also, it would be very advantageous to prepare anhydrous hydrogen iodide, lithium iodide and methyl iodide in the presence of a noble metal-containing catalyst which is the same or at least compatible with the noble metal-containing catalyst used in the carbonylation reaction. Clearly, this would eliminate or at least simplify the need for extensive and complicated treatments to remove catalyst components from the reaction product obtained in the synthesis of the iodine compound prior to using it in the carbonylation reaction.

Unfortunately, prior art methods for forming anhydrous hydrogen iodide, lithium iodide or methyl iodide involving the direct reaction of hydrogen with iodine in the presence of noble metal-containing catalysts have not met with great success. Thus, U.S. Patent 3,761,579 issued September 25, 1973 addresses this very point and states (column 1, lines 29—34):

" Anhydrous HI can be produced by the direct reaction of iodine vapor with hydrogen over a platinum catalyst at elevated temperatures. This method provides HI of high purity but the reaction is slow, conversion is not complete and yields of the desired product are consequently low."

In contrast to this specific teaching in the prior art, this invention provides a method for preparing anhydrous hydrogen iodide, lithium iodide and/or methyl iodide in good yield and at reasonable reaction rates by the direct reaction of hydrogen with iodine in the presence of a noble-metal containing catalyst. Specifically, this invention provides a process for preparing an anhydrous iodine compound which comprises reacting, under substantially anhydrous conditions, hydrogen with iodine in a non-alcoholic, organic solvent in the presence of a homogeneous rhodium catalyst, there being present no heretocyclic aromatic compound in which at least one heteroatom is a quaternary nitrogen atom and no quaternary organophosphorus compound. Where lithium iodide and/or methyl iodide are desired, lithium acetate and/or methyl acetate, respectively, are included in the reaction medium. In this situation, the lithium acetate and/or methyl acetate reacts *in situ* with the hydrogen iodide initially formed to provide the desired anhydrous lithium iodide or anhydrous methyl iodide.

In practicing this invention, hydrogen can be reacted with iodine at a hydrogen pressure of at least 15 psig (205 kPa), preferably 100 (791 kPa) to 500 psig (3549 kPa) at a temperature of 80 to 200°C., preferably 100 to 150°C. (The pressures indicated in kPa herein, are absolute pressures rather than gauge pressures). The nonalcoholic, organic solvent can be selected from a wide variety of compounds that are liquid under the reaction conditions. The particular solvent selected will vary depending on the presence of certain compounds in the reaction mixture. Examples of solvents that can be used include $C_2$—$C_4$ carboxylic acids, lower alkyl esters of such acids and hydrocarbons such as toluene. Acetic acid is the preferred solvent due to its compatibility with the acetic anhydride carbonylation process described hereinbefore. Other liquids can also be present such as acetic anhydride which assures that the reaction medium remains anhydrous.

When the process involves only the reaction of hydrogen and iodine, the resulting hydrogen iodide is essentially insoluble in the reaction mixture and therefore the gaseous hydrogen iodide is most conveniently collected by transferring it to an inert medium, an alkyl ester of a carboxylic acid or a solution of lithium acetate which converts the hydrogen iodide to an alkyl iodide or lithium iodide. For this reason it is preferred that a nonalcoholic hydrogen iodide "acceptor" such as methyl acetate and/or lithium acetate be initially included in the reaction medium. The presence of methyl acetate results in the formation of methyl iodide by the reaction with the former. When methyl acetate is the only hydrogen iodide acceptor used the solvent system can consist of acetic acid, methyl acetate or a hydrocarbon or a mixture thereof. However, when the acceptor is lithium acetate, which reacts with hydrogen iodide to give lithium iodide, the reaction medium contains a solvent such as acetic acid which will dissolve both lithium salts. The amounts of the solvents that are necessary will vary considerably depending on the amount of each reactant (iodine) or co-reactant (methyl or lithium acetate) present.

The catalyst employed in practicing this invention is believed to be an ionic rhodium species which forms as the result of contacting the rhodium component such as a rhodium halide or oxide with an iodine compound such as lithium iodide, methyl iodide, hydrogen iodide or iodine in the presence of carbon monoxide. The term homogeneous rhodium catalyst, as used herein, means that the catalytic species is soluble in the reaction medium. Such homogeneous rhodium catalysts are known in the art, as illustrated by U.S. Patents 3,761,579 and 4,046,807, European Published Patent Application No. 0 008 396 and Japanese Published Patent Application No. 75-47922, discussed previously herein. The catalyst component employed initially can be a soluble rhodium carbonyl compound such as $Rh_2(CO)_4Cl_2$ which when contacted with an iodine compound forms the "active" catalyst. The rhodium also can be fed initially as a halide such as $RhCl_3 \cdot xH_2O$ or an oxide such as $Rh_2O_3$. When the rhodium is fed as a halide or oxide, carbon monoxide is present during at least the start-up of the process. In the continuous operation in which methyl acetate and iodine are fed to a reaction zone and methyl iodide is removed, the hydrogen fed to the reaction zone can contain up to 95 volume percent carbon monoxide. The iodine necessary to convert the rhodium halide or oxide to the catalytically active rhodium compound can be derived from the iodine reactant although an induction period prior to the significant reaction of iodine and hydrogen can occur. The iodine source preferably is lithium iodide fed to the reaction mixture initially in a mole ratio of 2 to 10 moles per mole of rhodium.

The amount of catalyst employed can be varied substantially depending on such factors as the reaction pressures and temperatures used and, the desired rate of reaction. Generally, rhodium concentrations of 500 to 5000 ppm will be effective to catalyze the reaction of hydrogen and iodine while concentrations of 1000 to 2500 ppm are preferred.

As state hereinbefore, it is preferred that the reaction of hydrogen and iodine be carried out in the presence of a hydrogen iodide acceptor such as lithium or methyl acetate. Generally, the acceptor should be present in an amount of at least two moles per mole of iodine, preferably at least 3 moles of acceptor per mole of iodine fed. This ratio, is subject to variation. For example, in continuous operation of the process the amount of acceptor required will depend on the rate at which the iodine is converted to hydrogen iodide. When lithium iodide is the desired product, the weight ratio of lithium acetate (as the dihydrate) to acetic acid solvent can be in the range of 0.001 to 0.3 depending on the reaction temperature. The preferred ratio is 0.01 to 0.2. When only the preparation of methyl iodide is desired, the weight ratio of methyl acetate to acetic acid can be 0.1 to 100, preferably 4 to 10 since at the lower ratios, especially at lower temperatures, catalyst solubility can be a problem.

The invention is furter illustrated by the following examples.

Example 1

The following were charged to a 6-ounce (177 ml) pressure bottle fitted with a gas inlet line and a dip-tube/valve assembly permitting the removal of liquid samples: $Rh_2(CO)_4Cl_2$, 0.19 g.; LiOAc . $2H_2O$, 20.40 g.; LiI, 0.54 g.; $I_2$ 12.69 g.; HOAc, 100 mL; $Ac_2O$, 50 mL. The bottle was sealed and purged with hydrogen by pressurizing to 40 psig (377 kPa) then venting. The bottle was pressurized to 40 psig (377 kPa) with hydrogen then placed in an oil bath heated to 99°C. A constant pressure of hydrogen was maintained throughout the run. Samples were removed periodically and analyzed for LiOAc. The rate of disappearance of LiOAc indicates the production rate of hydrogen iodide. The reaction was complete in 95 minutes as evidenced by the absence of iodine.

Note: As used in this and the following Examples, LiOAc, HOAc and $Ac_2O$ are abbreviations for lithium acetate, acetic acid and acetic anhydride respectively.

Example 2

The following were charged to a 3-ounce (89 ml) pressure bottle fitted with a gas inlet line: $Rh_2(CO)_4Cl_2$, 0.19 g.; LiI, 0.54 g.; $I_2$, 6.35 g.; HOAc, 20.0 g.; $Ac_2O$, 5.0 g.; $CH_3OAc$, 10.0 g. The vessel was sealed and purged with hydrogen by pressurizing to 40 psig (377 kPa) then venting. The bottle was pressurized to 40 psig (377 kPa) with hydrogen then placed in an oil bath heated to 99°C. A constant pressure of 40 psig (377 kPa) hydrogen was maintained throughout the run. After 240 minutes the bottle was cooled and the contents analyzed by gas chromatography. The product contained 2.84 g. of methyl iodide.

Note: As used in this and the following Examples, $CH_3OAc$ is an abbreviation for methyl acetate.

Examples 3—9

The reactants and solvents set forth in Table I and catalyst (all in grams) were charged to a 300 $cm^3$ autoclave. After sealing, the autoclave was flushed with CO by pressurizing to 100 psig (791 kPa) then venting slowly. The autoclave was pressurized to 10 psig (170 kPa) with CO and heated to 160°C. The autoclave was then pressurized to 500 psig (3549 kPa) with $H_2$ and agitated for 1 hour. After cooling, the autoclave was vented and the product removed for analysis. In Examples 3—5 and 7—9, 0.26 g. $RhCl_3 \cdot xH_2O$ and in Example 6, 0.25 g. $Rh_2O_3$ was used in the catalyst. The yield of product is shown in Table I.

In Example 4, the product was treated with methyl acetate which, as shown by gas chromatographic (gc) analysis, resulted in the formation of a substantial amount of methyl iodide. In Examples 7, 8 and 9, the amount of product obtained was not determined quantitatively although gc analysis of the final reaction mixture showed the presence of a substantial amount of methyl iodide.

TABLE I

| Example | $I_2$ | LIOAc . $2H_2O$ | LiI | HOAc | $Ac_2O$ | $CH_3OAc$ | Toluene | Product, Yield |
|---|---|---|---|---|---|---|---|---|
| 3 | 12.69 | 20.4 | 0.54 | 75.0 | 75.0 | 0 | 0 | LiI, 86.4% |
| 4 | 12.69 | 0 | 0.54 | 75.0 | 75.0 | 14.82 | 0 | $CH_3I$, — |
| 5 | 12.69 | 20.4 | 0 | 75.0 | 75.0 | 0 | 0 | LiI, 89.0% |
| 6 | 12.69 | 20.4 | 0.54 | 75.0 | 75.0 | 0 | 0 | LiI, 90.0% |
| 7 | 12.69 | 0 | 0.54 | 0 | 25.0 | 14.82 | 125.0 | $CH_3I$ — |
| 8 | 12.69 | 0 | 0.54 | 0 | 0 | 14.82 | 125.0 | $CH_3I$ — |
| 9 | 12.69 | 0 | 0.54 | 0 | 0 | 150.0 | 0 | $CH_3I$ — |

**Claims**

1. Process for preparing an anhydrous iodine compound which comprises reacting, under substantially anhydrous conditions, hydrogen with iodine in a non-alcoholic, organic solvent in the presence of a homogeneous rhodium catalyst, there being present no heterocyclic aromatic compound in which at least one heteroatom is a quaternary nitrogen atom and no quaternary organophosphorus compound.

2. Process according to claim 1 wherein the hydrogen and iodine are reacted in the presence of lithium acetate to thereby form lithium iodide.

3. Process according to claim 1 wherein the hydrogen and iodine are reacted in the presence of methyl acetate to thereby form methyl iodide.

**Revendications**

1. Procédé de préparation d'un composé d'iode anhydre, consistant à faire réagir, dans des conditions pratiquement anhydres, de l'hydrogène avec de l'iode, dans un solvant organique non alcoolique, en présence d'un catalyseur de rhodium homogène, en l'absence de composé hétérocyclique aromatique dans lequel au moins un hétéroatome est un atome d'azote quaternatire, et en l'absence de composé organique de phosphore quaternaire.

2. Procédé selon la revendication 1, dans lequel l'hydrogène et l'iode réagissent en présence d'acétate de lithium pour former de l'iodure de lithium.

3. Procédé selon la revendication 1, dans lequel l'hydrogène et l'iode réagissent en présence d'acétate de méthyle pour former de l'iodure de méthyle.

**Patentansprüche**

1. Verfahren zur Herstellung einer wasserfreien Iodverbindung, bei dem man unter praktisch wasserfreien Bedingungen Wasserstoff mit Iod in einem nicht-alkoholischen organischen Lösungsmittel in Gegenwart eines homogenen Rhodiumkatalysators unsetzt, wobei keine heterocyclische aromatische Verbindung, in der mindestens ein Heteroatom ein quaternäres Stickstoffatom ist und keine quaternäre Organophosphor-verbindung zugegen sind.

2. Verfahren nach Anspruch 1, bei dem Wasserstoff und Iod in Gegenwart von Lithiumacetat unter Bildung von Lithiumiodid umgesetzt werden.

3. Verfahren nach Anspruch 1, bei dem Wasserstoff und Iod in Gegenwart von Methylacetat unter Bildung von Methyliodid umgesetzt werden.